# FASCICULE DE BREVET EUROPEEN

(11) **EP 2 462 701 B1**
(45) Date de publication et mention de la délivrance du brevet: **29.05.2013**
(21) Numéro de dépôt: 10739944.6
(22) Date de dépôt: 05.08.2010
(51) Int. Cl.: H04B 1/48, H01P 1/15, H01P 5/02

(54) **CIRCUIT DE COMMUTATION POUR DES SIGNAUX LARGE BANDE**
SCHALTKREIS FÜR BREITBANDSIGNALE
SWITCHING CIRCUIT FOR BROADBAND SIGNALS

(30) Priorité: 07.08.2009 FR 0903902
(43) Date de publication de la demande: 13.06.2012
(73) Titulaire: Thales, 92200 Neuilly Sur Seine (FR)
(72) Inventeur: CHAHBAZIAN, Frank, F-92704 Colombes Cedex (FR); GERFAULT, Bertrand, F-92704 Colombes Cedex (FR)
(74) Mandataire: Labatte, Laurent
(86) Numéro de dépôt international: PCT/EP2010/061444
(87) Numéro de publication internationale: WO 2011/015638

(56) Documents cités:
- JP-A- 2004 235 864
- US-A- 4 584 543
- US-A1- 2005 275 483
- US-A1- 2006 170 516

## Description

La présente invention concerne un circuit de commutation pour des signaux large bande. Elle s'applique notamment aux systèmes de radiocommunications, en particulier les systèmes de puissance.

Le circuit de réception et le circuit d'émission d'un système de radiocommunications utilisent parfois la même antenne, en particulier lorsqu'il est souhaité un système compact. Il est alors nécessaire de placer un commutateur entre l'antenne et lesdits circuits, le commutateur permettant aux circuits de partager l'antenne en connectant alternativement l'antenne avec le circuit émetteur et le circuit récepteur. Les signaux traités par le système de radiocommunications peuvent être des signaux de forte puissance, par exemple d'une puissance de l'ordre de 1000 W, et étalés sur une large bande de fréquences, par exemple de 1 MHz à 1 GHz.

Pour pouvoir transmettre un signal radiofréquences, un commutateur peut être réalisé avec un relais mécanique. Cependant, ce type de commutateur est relativement lent, la période de commutation étant généralement au minimum de l'ordre de 20ms. En outre, il a une durée de vie limitée par le nombre de commutations effectuées.

Des commutateurs sous forme de circuits électriques comprenant des composants actifs tels que des diodes ou des transistors ont également été proposés. Ces composants actifs sont classiquement polarisés à l'aide de sources de tension continue isolées du circuit radiofréquences par des inductances. Toutefois, les inductances présentent des capacités parasites entraînant des courts-circuits aux fréquences élevées et limitant ainsi la bande de fréquence de fonctionnement du commutateur.

Il est connu un commutateur, proposé dans le brevet américain publié sous le numéro US4,584,543, comprenant des transformateurs quart d'onde. Ce commutateur ne permet toutefois pas de fonctionner sur une large bande, notamment à cause de ces transformateurs.

Un but de l'invention est de proposer un dispositif apte à commuter un signal de puissance sur une large bande de fréquences. A cet effet, l'invention a pour objet un circuit de commutation pour commander le passage d'un signal radiofréquence entre une première entrée-sortie et une deuxième entrée-sortie, ledit circuit comprenant au moins une diode entre lesdites entrées-sorties, ledit circuit étant caractérisé en ce que ladite diode est polarisée par une source de tension continue par l'intermédiaire d'au moins deux lignes de transmission croisées interconnectant ladite diode avec ladite source de tension continue.

Selon un mode de réalisation du circuit de commutation selon l'invention chacune des lignes de transmission comporte au moins deux conducteurs, ladite source de tension de polarisation étant reliée à la première extrémité du deuxième conducteur de la première ligne, ladite diode étant placée entre la première extrémité du premier conducteur de la deuxième ligne et une entrée-sortie dudit circuit, lesdites lignes étant croisées entre-elles de sorte que la deuxième extrémité du premier conducteur de la première ligne est reliée à la deuxième extrémité du deuxième conducteur de la deuxième ligne et que la deuxième extrémité du deuxième conducteur de la première ligne est reliée à la deuxième extrémité du premier conducteur de la deuxième ligne, la première extrémité du premier conducteur de la première ligne étant reliée à l'entrée-sortie.

Le circuit de commutation selon l'invention est ouvert ou fermé au passage du signal radiofréquences selon la polarisation qui est appliquée à la diode. Contrairement à un circuit classique dont le fonctionnement est limité en bande à cause de la présence d'inductances, le circuit de commutation selon l'invention permet de polariser la diode sans engendrer de résonance indésirable et ainsi de commuter des signaux de puissance sur des bandes de fréquences très larges, par exemple de l'ordre de 30 octaves, 1 MHz jusqu'à 1 GHz.

Le circuit de commutation selon l'invention est adapté à commuter des signaux de forte puissance, d'une puissance au moins égale à 1000 Watts. De préférence, une diode PIN est utilisée, ce type de diode étant bien adapté à la commutation de signaux de puissance élevée.

Selon un mode de réalisation du circuit de commutation selon l'invention, chacune des lignes de transmission est un câble coaxial dont l'âme forme l'un des conducteurs de la ligne et la tresse forme l'autre conducteur de ladite ligne.

Chacune des lignes de transmission peut être entourée par un matériau de perméabilité magnétique supérieure à 1, pour allonger leur longueur électrique. Par exemple, un tore ferromagnétique peut être placé autour des lignes.

Selon un mode de réalisation du circuit de commutation selon l'invention, la première extrémité du deuxième conducteur de la deuxième ligne est reliée à une borne dudit circuit, laquelle borne est connectée à une masse électrique.

Selon un mode de réalisation du circuit de commutation selon l'invention, la première entrée-sortie dudit circuit est reliée à la première extrémité du premier conducteur de la première ligne, la diode reliée à la deuxième ligne de transmission via une première borne étant connectée via sa deuxième borne à la deuxième entrée-sortie dudit circuit. La borne de la diode reliée à la deuxième entrée-sortie est soit l'anode, soit la cathode, en fonction du sens dans lequel est transmis le signal radiofréquence.

Selon un autre mode de réalisation du circuit de commutation selon l'invention, la première entrée-sortie dudit circuit est reliée à la première extrémité du premier conducteur de la deuxième ligne et à la première borne de la diode, laquelle diode est connectée via sa deuxième borne à une masse électrique, ledit circuit comprenant une deuxième entrée-sortie reliée à la première extrémité du premier conducteur de la première ligne. Une capacité peut être placée entre la première entrée-sortie dudit circuit et la première extrémité de l'âme de la première ligne de transmission.

Le circuit de commutation selon l'invention peut comprendre une capacité placée entre la source de tension et la masse électrique.

Selon un mode de réalisation du circuit de commutation selon l'invention, une deuxième diode (D1) est reliée à la première extrémité (111 a) du premier conducteur de la première ligne (110) et commandée par une deuxième source de tension (Vdc1) reliée à la première extrémité du deuxième conducteur (122) de la deuxième ligne (120), les diodes (D1, D2) étant placées au choix comme suit :
- l'anode de la première diode (D2) et la cathode de la deuxième diode (D1) sont reliées chacune à une entrée-sortie (101, 105) différente,
- ou la cathode de la première diode (D2) et l'anode de la deuxième diode (D1) sont reliées chacune à une entrée-sortie (101, 105) différente.

Le circuit de commutation peut comprendre une capacité placée entre la source de tension et la masse électrique.

L'invention a également pour objet un dispositif d'aiguillage entre plusieurs entrées-sorties et un accès d'un signal de puissance, par exemple un signal large bande, fourni sur l'une desdites entrées-sorties, ledit dispositif comprenant un point de raccord polarisé par une source de tension, ledit dispositif étant caractérisé en ce qu'il comprend entre chacune desdites entrées-sorties et ledit point de raccord un circuit de commutation tel que décrit plus haut, la première entrée-sortie de chacun desdits circuits étant reliée à une entrée-sortie différente dudit dispositif, la deuxième entrée-sortie de chacun desdits circuits étant reliée entre-elles au point de raccord.

Selon un mode de réalisation du dispositif d'aiguillage, un module de polarisation est placé entre l'accès du dispositif d'aiguillage et le point de raccord, ledit module comprenant deux lignes de transmission, l'accès du dispositif étant relié à la première extrémité du premier conducteur de la première ligne, le point de raccord étant connecté à la première extrémité du premier conducteur de la deuxième ligne, une tension de polarisation étant appliquée sur le deuxième conducteur de ladite première ligne, lesdites lignes étant croisées entre-elles par connexion de la deuxième extrémité du premier conducteur de la première ligne avec le deuxième conducteur de la deuxième ligne et par connexion du deuxième conducteur de la première ligne avec la deuxième extrémité du premier conducteur de la deuxième ligne.

D'autres caractéristiques apparaîtront à la lecture de la description détaillée donnée à titre d'exemple et non limitative qui suit faite en regard de dessins annexés qui représentent :
- la figure 1, une illustration de la fonction remplie par le circuit de commutation selon l'invention ;
- la figure 2a, un premier mode de réalisation d'un circuit de commutation selon l'invention ;
- la figure 2b, un deuxième mode de réalisation d'un circuit de commutation selon l'invention ;
- la figure 2c, un troisième mode de réalisation d'un circuit de commutation selon l'invention ;
- la figure 2d, un quatrième mode de réalisation d'un circuit de commutation selon l'invention ;
- la figure 2e, un cinquième mode de réalisation d'un circuit de commutation selon l'invention ;
- la figure 2f, un sixième mode de réalisation d'un circuit de commutation selon l'invention ;
- la figure 3, un exemple d'agencement des circuits de commutation selon l'invention pour réaliser un dispositif d'aiguillage,
- la figure 4a, un premier exemple de dispositif d'aiguillage comprenant des circuits de commutation selon l'invention ;
- la figure 4b, un deuxième exemple de dispositif d'aiguillage comprenant des circuits de commutation selon l'invention ;
- la figure 5, un troisième exemple de dispositif d'aiguillage comprenant des circuits de commutation selon l'invention.

Dans un souci de clarté de la description, les mêmes références dans des figures différentes désignent les mêmes éléments.

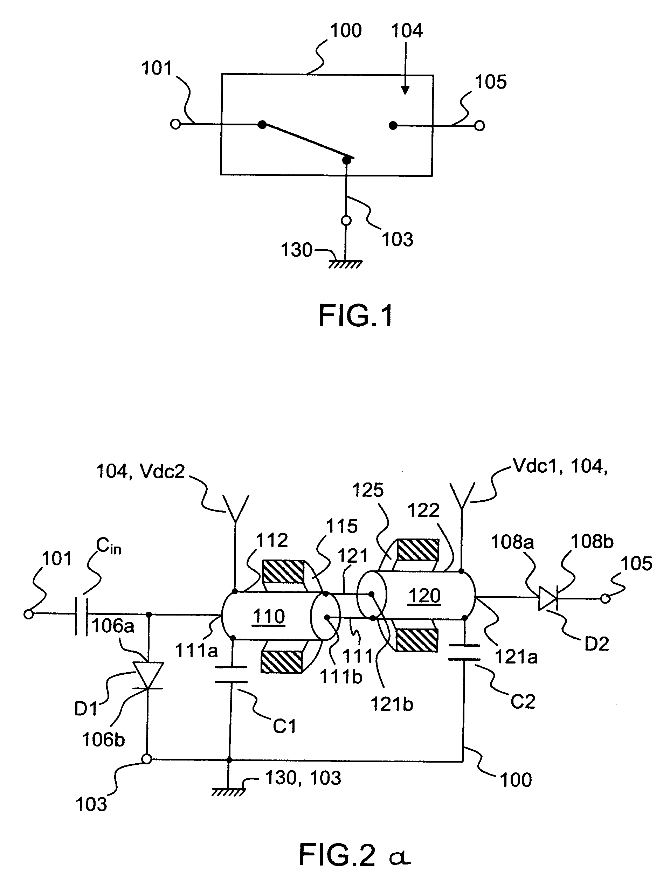

La figure 1 illustre la fonction remplie par le circuit de commutation selon l'invention. Le circuit de commutation 100 comprend une entrée-sortie 101 une borne 103 et une deuxième entrée-sortie 105. Dans les exemples présentés, la première entrée-sortie 101 joue le rôle d'entrée et la deuxième entrée-sortie 105 joue le rôle de sortie mais ces deux rôles peuvent être permutés. Un signal radiofréquence reçu par l'entrée 101 est dirigé, soit vers la borne 103 qui est connectée à une masse électrique 130 dans l'exemple, soit vers la deuxième sortie 105 en fonction d'une commande 104.

La figure 2a présente un premier mode de réalisation d'un circuit de commutation selon l'invention. Le circuit de commutation 100 de la figure 2a comprend deux composants actifs - dans l'exemple, deux diodes D1, D2 —, deux lignes de transmission — dans l'exemple, deux câbles coaxiaux 110, 120 —. Par ligne de transmission, on entend un ensemble d'un (en réalité deux si l'on considère la masse), de deux ou plusieurs conducteurs acheminant de concert un signal électrique d'une source vers une charge. Dans l'exemple, la tresse 112, 122 et l'âme 111, 121 de chaque câble coaxial 110, 120 sont les deux conducteurs acheminant le courant. D'autres éléments peuvent être utilisés à la place des câbles coaxiaux 110, 120 pour réaliser les lignes de transmission, par exemple des paires bi-filaires ou des paires torsadées. Dans le cas d'un circuit imprimé, une ligne de transmission peut prendre la forme d'une ligne imprimée.

Selon le premier mode de réalisation, l'anode 106a de la première diode D1 est reliée à l'entrée 101 du circuit de commutation 100, la cathode 106b de cette même diode D1 étant reliée à la borne 103 dudit circuit 100. La cathode 108b de la deuxième diode D2 est reliée à la deuxième sortie 105 du circuit de commutation 100. L'anode 106a de la première diode D1 et l'entrée 101 du circuit 100 sont connectées à une première extrémité 111a de l'âme du premier câble coaxial 110, tandis que l'anode 108a de la deuxième diode D2 est connectée à la première extrémité 121 a de l'âme du second câble coaxial 120.

Les câbles coaxiaux 110, 120 sont reliés entre-eux de manière croisée. La seconde extrémité 111 b de l'âme du premier câble coaxial 110 est connectée à la tresse 122 du deuxième câble coaxial 120, la seconde extrémité 121b de l'âme du deuxième câble coaxial 120 étant connectée à la tresse 112 du premier câble 110. Le croisement permet d'inverser les états de courant continu et radiofréquences. Avantageusement, chaque câble coaxial 110, 120 est entouré par un élément 115, 125 de perméabilité magnétique au moins égale à 1. Dans l'exemple, l'élément 115, 125 est un tore ferromagnétique 115, 125 (représenté tronqué sur la figure 2a). Le tore 115, 125 est par exemple constitué de ferrite, matériau peu coûteux ayant une perméabilité magnétique élevée. Bien que non indispensable, chacun de ces tores 115, 125 permet d'allonger la longueur électrique de la ligne de transmission constituée par le câble 110, 120, et ainsi de faire fonctionner le circuit de commutation 100 à des fréquences plus basses, par conséquent d'augmenter la bande de fonctionnement de ce circuit.

En outre, l'anode 106a de la première diode D1 est polarisée avec une source de tension Vdc1 continue connectée sur la tresse 122 du deuxième câble coaxial 120, l'anode 108a de la deuxième diode D2 étant polarisée avec une source de tension Vdc2 connectée sur la tresse 112 du premier câble coaxial 110. Les sources de tension Vdc1 et Vdc2 jouent le rôle de la commande 104 présentée en figure 1. Dans l'exemple, une capacité C_{IN} est placée entre l'entrée 101 du circuit de commutation et la diode D1 pour isoler cette dernière du courant radiofréquence en entrée 101. Par ailleurs, une première capacité C1 est placée entre la tresse 112 du premier câble coaxial 110 et une masse électrique 130 et une deuxième capacité C2 est placée entre la tresse 122 du deuxième câble coaxial 120 et la masse électrique 130, de manière à isoler les tresses 112, 122 du courant radiofréquences. Selon un autre mode de réalisation, le circuit de commutation 100 ne comprend pas la première capacité C1 et la deuxième capacité C2.

Les tensions de polarisation Vdc1, Vdc2 sont appliquées de sorte que lorsque la première diode D1 est passante, la deuxième diode D2 est bloquée et que lorsque la première diode D1 est bloquée, la deuxième diode D2 est passante. Par exemple, si une tension nulle est appliquée sur la deuxième sortie 105, la borne 103 étant reliée à la masse électrique 130, alors une première tension Vdc1 négative combinée avec une deuxième tension Vdc2 positive permet de diriger un signal entrant 101 vers la deuxième sortie 105. A contrario, si une tension nulle est appliquée sur la deuxième sortie 105, la borne 103 étant reliée à la masse électrique 130, alors une première tension Vdc1 positive combinée avec une deuxième tension Vdc2 négative permet de diriger un signal entrant 101 vers la borne 103.

Tous types de diodes peuvent être utilisées en guise de composants actifs D1, D2. Par exemple, les diodes Schottky ou des diodes PIN peuvent être employées, les diodes PIN étant préférées pour les signaux de puissance élevée.

Dans le cas où l'entrée 101 et la deuxième sortie 105 sont permutées, alors chaque diode D1, D2 peut être placée en sens inverse du sens présenté en figure 2a, de sorte que la cathode 106b de la première diode D1 soit connectée à l'âme du premier câble 110, son anode étant connectée à borne 103, et que la cathode de la deuxième diode D2 soit connectée à l'âme du deuxième câble 120, son anode étant connectée à la deuxième sortie 105.

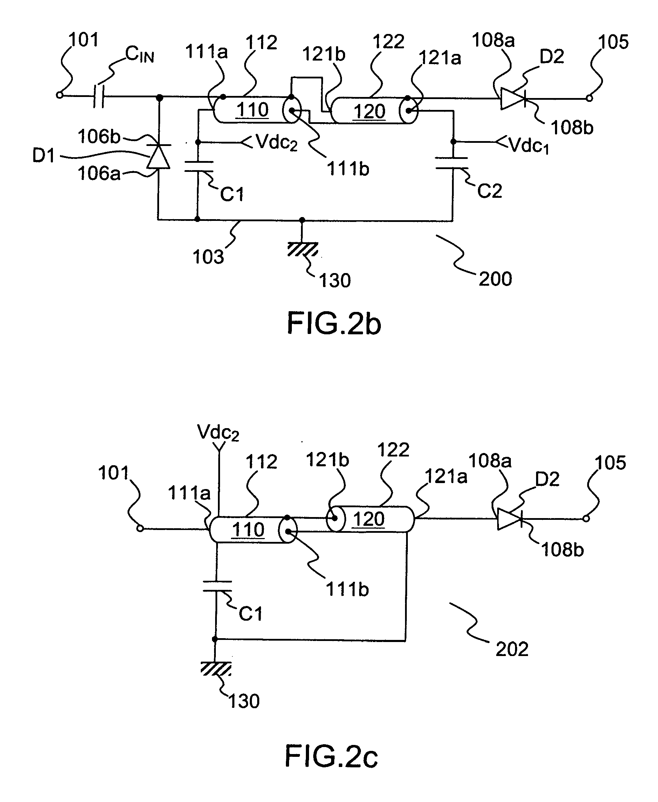

La figure 2b présente un deuxième mode de réalisation d'un circuit de commutation selon l'invention. Comme le premier mode de réalisation de la figure 2a, le circuit de commutation 200 de la figure 2a comprend deux diodes D1, D2 et deux câbles coaxiaux 110, 120. Toutefois, par rapport à ce premier mode de réalisation, les polarisations sont inversées au niveau de la tresse et de l'âme des câbles 110, 120.

Plus précisément, la cathode 106b de la première diode D1 est reliée à l'entrée 101 du circuit de commutation 200, l'anode 106a de cette même diode D1 étant reliée à la borne 103 dudit circuit 100, laquelle est reliée à la masse électrique 130. La cathode 108b de la deuxième diode D2 est reliée à la deuxième sortie 105 du circuit de commutation 200. La cathode 106b de la première diode D1 et l'entrée 101 du circuit 200 sont connectées à la tresse 112 du premier câble coaxial 110, tandis que l'anode 108a de la deuxième diode D2 est connectée à la tresse 122 du second câble coaxial 120.

Les câbles coaxiaux 110, 120 sont reliés entre-eux de manière croisée. La seconde extrémité 111 b de l'âme du premier câble coaxial 110 est connectée à la tresse 122 du deuxième câble coaxial 120, la seconde extrémité 121b de l'âme du deuxième câble coaxial 120 étant connectée à la tresse 112 du premier câble 110. Comme dans le premier mode de réalisation, chaque câble coaxial 110, 120 est avantageusement entouré par un élément de perméabilité magnétique au moins égale à 1, élément non représenté sur la figure par souci de simplification.

En outre, la cathode 106b de la première diode D1 est polarisée avec une source de tension Vdc1 continue connectée sur la première extrémité 121 a de l'âme du deuxième câble coaxial 120, l'anode 108a de la deuxième diode D2 étant polarisée avec une source de tension Vdc2 connectée sur la première extrémité 111 a de l'âme du premier câble coaxial 110. Dans l'exemple, une capacité C_{IN} est placée entre l'entrée 101 du circuit de commutation et la diode D1 pour isoler cette dernière du courant radiofréquence en entrée 101. Par ailleurs, une première capacité C1 est placée entre la première extrémité 111a de l'âme du premier câble coaxial 110 et la masse électrique 130 et une deuxième capacité C2 est placée entre la première extrémité 121 a de l'âme du deuxième câble coaxial 120 et la masse électrique 130.

La figure 2c présente un troisième mode de réalisation d'un circuit de commutation selon l'invention. Par rapport au premier mode de réalisation de la figure 2a, le circuit de commutation 202 ne comprend pas de diode D1. Autrement dit, le circuit de commutation 202 de la figure 2c comprend une diode D2 et deux câbles coaxiaux 110, 120.

La cathode 108b de la deuxième diode D2 est reliée à la deuxième sortie 105 du circuit de commutation 100. L'entrée 101 du circuit 100 est connectée à la première extrémité 111a de l'âme du premier câble coaxial 110, tandis que l'anode 108a de la deuxième diode D2 est connectée à la première extrémité 121a de l'âme du second câble coaxial 120.

Les câbles coaxiaux 110, 120 sont reliés entre-eux de manière croisée. La seconde extrémité 111 b de l'âme du premier câble coaxial 110 est connectée à la tresse 122 du deuxième câble coaxial 120, la seconde extrémité 121b de l'âme du deuxième câble coaxial 120 étant connectée à la tresse 112 du premier câble 110.

En outre, l'anode 108a de la deuxième diode D2 est polarisée avec une source de tension Vdc2 connectée sur la tresse 112 du premier câble coaxial 110. Aucune capacité C_{IN} n'est nécessaire en entrée 101 du circuit de commutation car il n'y pas de diode à isoler du courant radiofréquence en entrée 101. Par ailleurs, une première capacité C1 est placée entre la tresse 112 du premier câble coaxial 110 et la masse électrique 130.

Bien que le mode de réalisation de la figure 2c ne permette pas une commutation d'aussi bonne qualité que celle du premier mode de réalisation présenté en figure 2a, il permet de s'affranchir d'une source de polarisation Vdc1 et d'une capacité C_{IN}, ce qui est appréciable, notamment, lorsqu'on cherche à réduire la dimension d'un circuit.

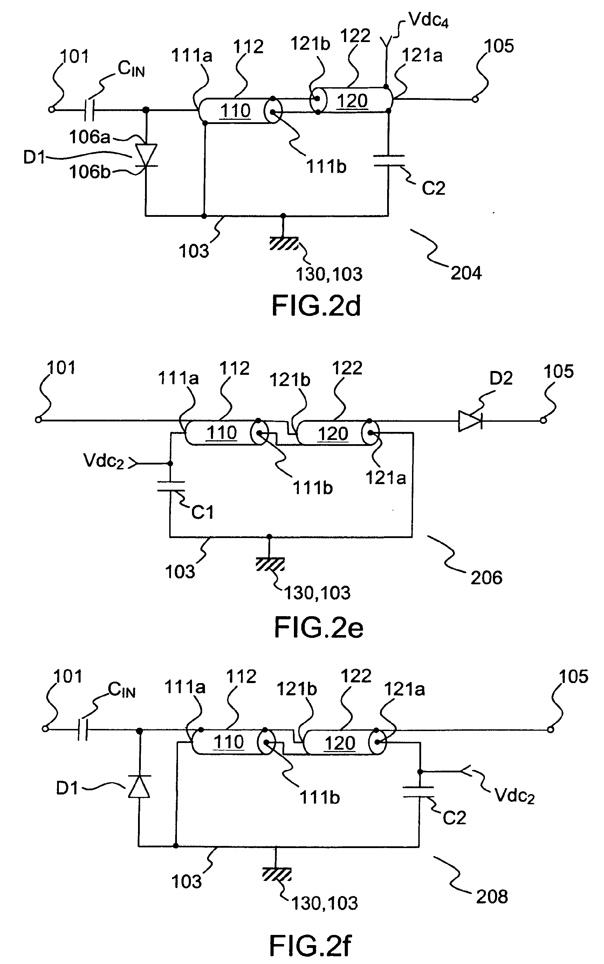

La figure 2d présente un quatrième mode de réalisation d'un circuit de commutation selon l'invention. Par rapport au premier mode de réalisation de la figure 2a, le circuit de commutation 204 ne comprend pas de diode D2. Autrement dit, le circuit de commutation 204 de la figure 2d comprend une diode D1 et deux câbles coaxiaux 110, 120. Bien que le mode de réalisation de la figure 2d ne permette pas une commutation d'aussi bonne qualité que celle du premier mode de réalisation présenté en figure 2a, il permet de s'affranchir d'une source de polarisation Vdc2.

La figure 2e présente un cinquième mode de réalisation d'un circuit de commutation selon l'invention. Par rapport au deuxième mode de réalisation de la figure 2b, le circuit de commutation 206 ne comprend pas de diode D1. Autrement dit, le circuit de commutation 206 de la figure 2e comprend une diode D2 et deux câbles coaxiaux 110, 120.

La figure 2f présente un sixième mode de réalisation d'un circuit de commutation selon l'invention. Par rapport au deuxième mode de réalisation de la figure 2b, le circuit de commutation 208 ne comprend pas de diode D2. Autrement dit, le circuit de commutation 204 de la figure 2d comprend une diode D1 et deux câbles coaxiaux 110, 120. Bien que le mode de réalisation de la figure 2d ne permette pas une commutation d'aussi bonne qualité que celle du premier mode de réalisation présenté en figure 2a, il permet de s'affranchir d'une source de polarisation Vdc2.

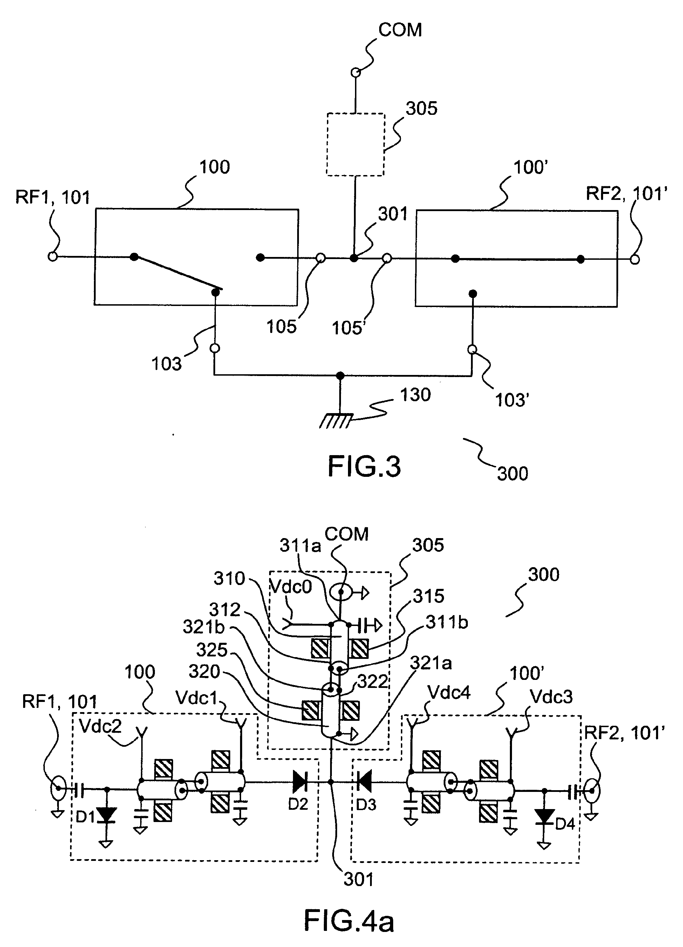

La figure 3 présente un exemple d'agencement des circuits de commutation selon l'invention pour réaliser un dispositif d'aiguillage sans inductance. Le dispositif d'aiguillage 300 de la figure 3 comporte deux entrées RF1, RF2 et une sortie COM. Des signaux sont reçus sur les deux entrées RF1, RF2 et le dispositif d'aiguillage permet d'orienter l'un ou l'autre de ces signaux vers l'unique sortie COM.

Le dispositif d'aiguillage 300 comprend deux circuits 100, 100' de commutation selon l'invention. L'entrée 101 du premier circuit de commutation 100 est reliée à l'entrée RF1 du dispositif d'aiguillage 300. L'entrée 101' du second circuit de commutation 100' est reliée à la deuxième entrée 101' du dispositif 300. Les bornes 103, 103' de chaque circuit de commutation 100, 100' sont raccordées à une masse électrique 130 et les deuxièmes sorties 105, 105' de chaque circuit de commutation 100, 100' sont raccordées entre-elles à un point de raccord 301. En outre, le point de raccord 301 est polarisé par une tension continue délivré par un bloc 305 placé entre la sortie COM du dispositif 300 et le point de raccord 301.

Les circuits de commutation 100, 100' sont commandés de manière alternée, de sorte que lorsqu'un circuit transmet le signal qu'il reçoit sur son entrée vers le point de raccord 301 et donc vers la sortie COM, l'autre circuit de commutation transmet le signal qu'il reçoit vers la masse électrique 130.

La figure 4a présente un premier exemple de dispositif d'aiguillage comprenant des circuits de commutation selon l'invention. Le dispositif d'aiguillage de la figure 4a correspond au schéma de principe présenté en figure 3.

Le bloc 305 permettant de polariser le point de raccord 301 comprend deux lignes de transmission 310, 320 et une source de tension continue Vdc0. Dans l'exemple, les deux lignes de transmission 310, 320 sont des câbles coaxiaux 310, 320. La première extrémité 311a de l'âme du premier câble 310 est reliée à la sortie COM du dispositif d'aiguillage 300 et la première extrémité 321 a de l'âme du deuxième câble 320 est reliée au point de raccord 301.

Les câbles coaxiaux 310, 320 sont reliés entre-eux de manière croisée. La seconde extrémité 311 b de l'âme du premier câble coaxial 310 est connectée à la tresse 322 du deuxième câble coaxial 320, la seconde extrémité 321 b de l'âme du deuxième câble coaxial 320 étant connectée à la tresse 312 du premier câble 310. Dans l'exemple, chaque câble coaxial 110, 120 est entouré par un tore ferromagnétique 315, 325 (les tores sont représentés tronqués sur la figure 4a). La source de tension continue Vdc0 est appliquée sur la tresse 312 du premier câble coaxial 310, de manière à polariser le point de raccord 301 via les deux câbles coaxiaux 310, 320. Dans l'exemple, la tension Vdc0 appliquée est nulle.

Par ailleurs, les tensions Vdc1, Vdc3 et Vdc2, Vdc4 de polarisation des diodes des circuits de commutation sont commandées de manière synchronisée. Autrement dit, la première tension Vdc1 du premier circuit de commutation 100 et la deuxième tension Vdc3 du deuxième circuit de commutation 100' sont positives lorsque la deuxième tension Vdc2 du premier circuit de commutation 100 et la première tension Vdc4 du deuxième circuit de commutation 100' sont négatives. De même, la première tension Vdc1 du premier circuit de commutation 100 et la deuxième tension Vdc3 du deuxième circuit de commutation 100' sont négatives lorsque la deuxième tension Vdc2 du premier circuit de commutation 100 et la première tension Vdc4 du deuxième circuit de commutation 100' sont positives.

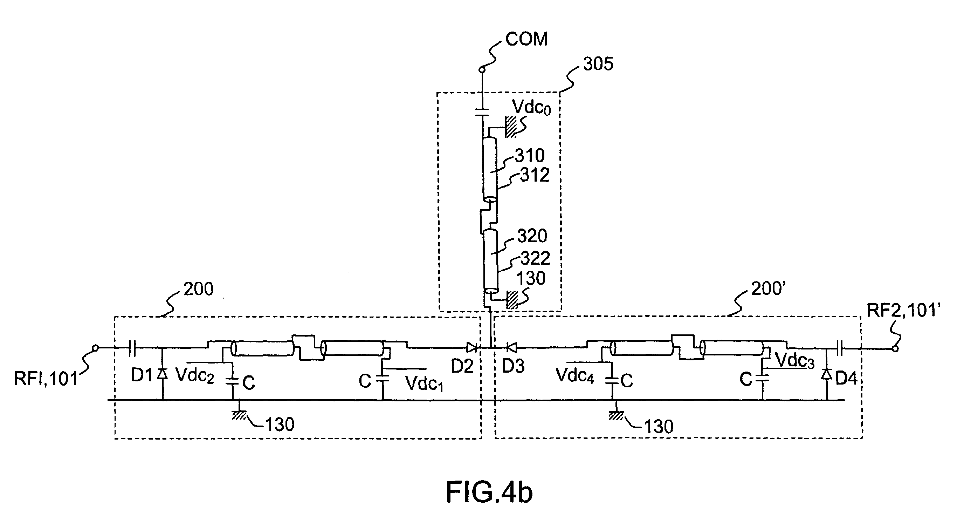

La figure 4b présente un deuxième exemple de dispositif d'aiguillage comprenant des circuits de commutation selon l'invention. Le dispositif de la figure 4b comporte un agencement identique des circuits de commutation que celui de la figure 4a, mais chacun de ces circuits 200, 200' est un circuit de commutation selon le deuxième mode de réalisation présenté en figure 2b.

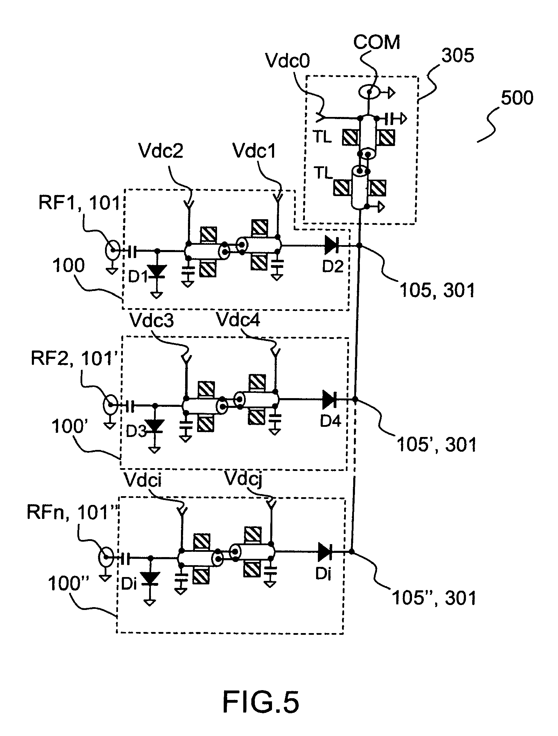

La figure 5 présente un troisième exemple de dispositif d'aiguillage comprenant des circuits de commutation selon l'invention. Le dispositif d'aiguillage de la figure 5 est une généralisation du dispositif de la figure 3 et 4. Il comporte N entrées RF1, RF2, RFN et une seule sortie COM. Des signaux sont reçus sur les N entrées RF1, RF2, RFN et le dispositif d'aiguillage permet d'orienter l'un ou l'autre de ces signaux vers l'unique sortie COM.

Dans le dispositif 500 de la figure 5, un nombre N de circuits de commutation sont utilisés. L'entrée 101, 101', 101" de chaque circuit de commutation 100, 100', 100" est reliée à l'entrée RF1 du dispositif d'aiguillage 300. L'entrée 101' du second circuit de commutation 100' est reliée à la deuxième entrée 101' du dispositif 300. Les bornes 103, 103' de chaque circuit de commutation 100, 100' sont raccordées à une masse électrique 130 et les deuxièmes sorties 105, 105' de chaque circuit de commutation 100, 100' sont raccordées entre-elles à un point de raccord 301 polarisé en tension.

Le circuit de commutation selon l'invention peut être employé dans des systèmes de radiocommunications, par exemple pour la sélection de multiples émetteurs vers de multiples antennes ou la sélection de multiples antennes vers de multiples récepteurs. Selon une autre mise en oeuvre, le circuit de commutation selon l'invention peut être utilisé pour la sélection d'un filtre de sous-bande de fréquence parmi plusieurs en aval d'un émetteur unique et vers un émetteur unique.

Contrairement aux commutateurs de l'art antérieur qui étaient limités en bande passante, ceux-ci pouvant fonctionner par exemple pour des signaux de forte puissance étalés sur quelques octaves, par exemple sur une bande de fréquence de 20 à 100 MHz, le commutateur selon l'invention peut fonctionner pour des signaux de forte puissance, par exemple 1000 W, et étalés sur 20 ou 30 octaves, par exemple de 1 MHz à 1 GHz.

## Revendications

1. Circuit de commutation (202) pour commander le passage d'un signal radiofréquence entre une première entrée-sortie (101) et une deuxième entrée-sortie (105), ledit circuit comprenant au moins une diode (D2) entre lesdites entrées-sorties (101, 105), ledit circuit étant **caractérisé en ce que** ladite diode (D2) est polarisée par une source de tension continue (Vdc2) par l'intermédiaire d'au moins deux lignes de transmission (110, 120) croisées interconnectant ladite diode (D2) avec ladite source de tension continue (Vdc2).

2. Circuit de commutation (202) selon la revendication 1, chacune desdites lignes (110, 120) comportant au moins deux conducteurs (111, 121, 112, 122), ledit circuit étant **caractérisé en ce que** la source de tension de polarisation (Vdc2) est reliée à la première extrémité du deuxième conducteur (112) de la première ligne (110), ladite diode (D2) étant placée entre la première extrémité (121a) du premier conducteur de la deuxième ligne (120) et une entrée-sortie (101, 105) dudit circuit, lesdites lignes (110, 120) étant croisées entre-elles de sorte que la deuxième extrémité (111b) du premier conducteur de la première ligne (110) est reliée à la deuxième extrémité du deuxième conducteur (122) de la deuxième ligne (120) et que la deuxième extrémité du deuxième conducteur (112) de la première ligne (110) est reliée à la deuxième extrémité (121b) du premier conducteur de la deuxième ligne (120), la première extrémité (111a) du premier conducteur de la première ligne (110) étant reliée à l'entrée-sortie (101, 105).

3. Circuit de commutation selon la revendication 1 ou 2, **caractérisé en ce que** chacune des lignes de transmission (110, 120) est un câble coaxial dont l'âme (111, 121) forme l'un des conducteurs de la ligne et la tresse (112, 122) forme l'autre conducteur de ladite ligne.

4. Circuit de commutation selon l'une des revendications 1 à 3, **caractérisé en ce que** chacune des lignes de transmission (110, 120) est entourée par un matériau de perméabilité magnétique supérieure à 1 (315, 325).

5. Circuit de commutation selon l'une quelconque des revendications 2 à 4, **caractérisé en ce que** la première extrémité du deuxième conducteur (122) de la deuxième ligne (120) est reliée à une borne (103) dudit circuit, laquelle borne (103) est connectée à une masse électrique (130).

6. Circuit de commutation selon l'une quelconque des revendications 2 à 5, **caractérisé en ce que** la première entrée-sortie (101) dudit circuit est reliée à là première extrémité (111a) du premier conducteur de la première ligne (110), la diode (D2) reliée à la deuxième ligne de transmission (120) via une première borne (108a) étant connectée via sa deuxième borne (108b) à la deuxième entrée-sortie (105) dudit circuit.

7. Circuit de commutation selon l'une quelconque des revendications 2 à 4, **caractérisé en ce que** la première entrée-sortie (101) dudit circuit est reliée à la première extrémité (121 a) du premier conducteur de la deuxième ligne (120) et à la première borne (108a) de la diode (D2), laquelle diode (D2) est connectée via sa deuxième borne (108b) à une masse électrique (130), ledit circuit comprenant une deuxième entrée-sortie (105) reliée à la première extrémité (111a) du premier conducteur de la première ligne (110).

8. Circuit de commutation selon la revendication 7, **caractérisé en ce qu'**une capacité (C_{IN}) est placée entre la première entrée-sortie (101) dudit circuit et la première extrémité (111a) de l'âme de la première ligne de transmission (110).

9. Circuit de commutation selon l'une quelconque des revendications précédentes, **caractérisé en ce qu'**il comprend une capacité (C1) placée entre la source de tension (Vdc2) et la masse électrique (130).

10. Circuit de commutation selon l'une quelconque des revendications 2 à 9, **caractérisé en ce qu'**il comprend une deuxième diode (D1) reliée à la première extrémité (111 a) du premier conducteur de la première ligne (110) et commandée par une deuxième source de tension (Vdc1) reliée à la première extrémité du deuxième conducteur (122) de la deuxième ligne (120), les diodes (D1, D2) étant placées au choix comme suit :
- l'anode de la première diode (D2) et la cathode de la deuxième diode (D1) sont reliées chacune à une entrée-sortie (101, 105) différente,
- ou la cathode de la première diode (D2) et l'anode de la deuxième diode (D1) sont reliées chacune à une entrée-sortie (101, 105) différente.

11. Circuit de commutation selon la revendication 10, **caractérisé en ce qu'**il comprend une capacité (C2) placée entre la source de tension (Vdc1) et la masse électrique (130).

12. Dispositif d'aiguillage entre plusieurs entrées-sorties (RF1, RF2) et un accès (COM) d'un signal de puissance fourni sur l'une desdites entrées-sorties (RF1, RF2), ledit dispositif comprenant un point de raccord (301) polarisé par une source de tension (Vdc0), ledit dispositif étant **caractérisé en ce qu'**il comprend entre chacune desdites entrées-sorties (RF1, RF2) et ledit point de raccord (301) un circuit de commutation (100, 100') selon l'une des revendications précédentes, la première entrée-sortie (101, 101') de chacun desdits circuits (100, 100') étant reliée à une entrée-sortie différente (RF1, RF2) dudit dispositif, la deuxième entrée-sortie (105, 105') de chacun desdits circuits étant reliée entre-elles au point de raccord (301).

13. Dispositif d'aiguillage selon la revendication 12, **caractérisé en ce qu'**un module de polarisation (305) est placé entre l'accès (COM) du dispositif d'aiguillage et le point de raccord (301), ledit module comprenant deux lignes de transmission (310, 320), l'accès (COM) du dispositif étant relié à la première extrémité (311a) du premier conducteur de la première ligne (310), le point de raccord (301) étant connecté à la première extrémité (321 a) du premier conducteur de la deuxième ligne (320), une tension de polarisation (Vdc0) étant appliquée sur le deuxième conducteur (312) de ladite première ligne (320), lesdites lignes (310, 320) étant croisées entre-elles par connexion de la deuxième extrémité (311b) du premier conducteur de la première ligne (310) avec le deuxième conducteur (322) de la deuxième ligne (320) et par connexion du deuxième conducteur (312) de la première ligne (310) avec la deuxième extrémité (321 b) du premier conducteur de la deuxième ligne (320).

## Patentansprüche

1. Schaltkreis (202) zur Steuerung des Übergangs eines Funkfrequenzsignals zwischen einem ersten Eingang-Ausgang (101) und einem zweiten Eingang-Ausgang (105), wobei der Kreis mindestens eine Diode (D2) zwischen den Eingängen-Ausgängen (101, 105) umfasst, wobei der Kreis **dadurch gekennzeichnet ist, dass** die Diode (D2) über mindestens zwei gekreuzte Übertragungsleitungen (110, 120), die die Diode (D2) mit der Gleichspannungsquelle (Vdc2) verbinden, von einer Gleichspannungsquelle (Vdc2) polarisiert ist.

2. Schaltkreis (202) nach Anspruch 1, wobei jede der Leitungen (110, 120) mindestens zwei Leiter (111, 121, 112, 122) aufweist, wobei der Kreis **dadurch gekennzeichnet ist, dass** die Quelle der Polarisationsspannung (Vdc2) mit dem ersten Ende des zweiten Leiters (112) der ersten Leitung (110) verbunden ist, wobei die Diode (D2) zwischen dem ersten Ende (121a) des ersten Leiters der zweiten Leitung (120) und einem Eingang-Ausgang (101, 105) des Kreises platziert ist, wobei die Leitungen (110, 120) untereinander derart gekreuzt sind, dass das zweite Ende (111b) des ersten Leiters der ersten Leitung (110) mit dem zweiten Ende des zweiten Leiters (122) der zweiten Leitung (120) verbunden ist und dass das zweite Ende des zweiten Leiters (112) der ersten Leitung (110) mit dem zweiten Ende (121b) des ersten Leiters der zweiten Leitung (120) verbunden ist, wobei das erste Ende (111a) des ersten Leiters der ersten Leitung (110) mit dem Eingang-Ausgang (101, 105) verbunden ist.

3. Schaltkreis nach Anspruch 1 oder 2, **dadurch gekennzeichnet, dass** jede der Übertragungsleitungen (110, 120) ein koaxiales Kabel ist, dessen Seele (111, 121) einen der Leiter der Leitung bildet und dessen Beflechtung (112, 122) den anderen Leiter der Leitung bildet.

4. Schaltkreis nach einem der Ansprüche 1 bis 3, **dadurch gekennzeichnet**, jede der Übertragungsleitungen (110, 120) von einem Material mit einer magnetischen Permeabilität höher als 1 (315, 325) umgeben ist.

5. Schaltkreis nach einem der Ansprüche 2 bis 4, **dadurch gekennzeichnet, dass** das erste Ende des zweiten Leiters (122) der zweiten Leitung (120) mit einer Klemme (103) des Kreises verbunden ist, wobei die Klemme (103) an eine elektrische Masse (130) angeschlossen ist.

6. Schaltkreis nach einem der Ansprüche 2 bis 5, **dadurch gekennzeichnet, dass** der erste Eingang-Ausgang (101) des Kreises mit dem ersten Ende (111a) des ersten Leiters der ersten Leitung (110) verbunden ist, wobei die Diode (D2), die mit der zweiten Übertragungsleitung (120) über eine erste Klemme (108a) verbunden ist, über ihre zweite Klemme (108b) an den zweiten Eingang-Ausgang (105) des Kreises angeschlossen ist.

7. Schaltkreis nach einem der Ansprüche 2 bis 4, **dadurch gekennzeichnet, dass** der erste Eingang-Ausgang (101) des Kreis mit dem ersten Ende (121a) des ersten Leiters der zweiten Leitung (120) und mit der ersten Klemme (108a) der Diode (D2) verbunden ist, wobei die Diode (D2) über ihre zweite Klemme (108b) an eine elektrische Masse (130) angeschlossen ist, wobei der Kreis einen zweiten Eingang-Ausgang (105) umfasst, der mit dem ersten Ende (111a) des ersten Leiters der ersten Leitung (110) verbunden ist.

8. Schaltkreis nach Anspruch 7, **dadurch gekennzeichnet, dass** eine Kapazität (C_{IN}) zwischen dem ersten Eingang-Ausgang (101) des Kreises und dem ersten Ende (111a) der Seele der ersten Übertragungsleitung (110) platziert ist.

9. Schaltkreis nach einem der vorangehenden Ansprüche, **dadurch gekennzeichnet, dass** er eine Kapazität (C1) umfasst, die zwischen der Spannungsquelle (Vdc2) und der elektrischen Masse (130) platziert ist.

10. Schaltkreis nach einem der Ansprüche 2 bis 9, **dadurch gekennzeichnet, dass** er eine zweite Diode (D1) umfasst, die mit dem ersten Ende (111a) des ersten Leiters der ersten Leitung (110) verbunden ist und von einer zweiten Spannungsquelle (Vdc1), die mit dem ersten Ende des zweiten Leiters (122) der zweiten Leitung (120) verbunden ist, gesteuert wird, wobei Dioden (D1, D2) wahlweise folgendermaßen platziert sind:
- die Anode der ersten Diode (D2) und die Kathode der zweiten Diode (D1) sind jeweils mit einem unterschiedlichen Eingang-Ausgang (101, 105) verbunden,
- oder die Kathode der ersten Diode (D2) und die Anode der zweiten Diode (D1) sind jeweils mit einem unterschiedlichen Eingang-Ausgang (101, 105) verbunden.

11. Schaltkreis nach Anspruch 10, **dadurch gekennzeichnet, dass** er eine Kapazität (C2) umfasst, die zwischen der Spannungsquelle (Vdc1) und der elektrischen Masse (130) platziert ist.

12. Weichenvorrichtung zwischen mehreren Eingängen-Ausgängen (RF1, RF2) und einem Zugang (COM) eines Leistungssignals, das über einen der Eingänge-Ausgänge (RF1, RF2) bereitgestellt wird, wobei die Vorrichtung einen von einer Spannungsquelle (Vdc0) polarisierten Anschlusspunkt (301) umfasst, wobei die Vorrichtung **dadurch gekennzeichnet ist, dass** sie zwischen jedem der Eingänge-Ausgänge (RF1, RF2) und dem Anschlusspunkt (301) einen Schaltkreis (100, 100') nach einem der vorangehenden Ansprüche umfasst, wobei der erste Eingang-Ausgang (101, 101') jedes der Kreise (100, 100') mit einem unterschiedlichen Eingang-Ausgang (RF1, RF2) der Vorrichtung verbunden ist, wobei der zweite Eingang-Ausgang (105, 105') jedes der Kreise untereinander mit dem Anschlusspunkt (301) verbunden ist.

13. Weichenvorrichtung nach Anspruch 12, **dadurch gekennzeichnet, dass** ein Polarisierungsmodul (305) zwischen dem Zugang (COM) der Weichenvorrichtung und dem Anschlusspunkt (301) platziert ist, wobei das Modul zwei Übertragungsleitungen (310, 320) umfasst, wobei der Zugang (COM) der Vorrichtung mit dem ersten Ende (311 a) des ersten Leiters der ersten Leitung (310) verbunden ist, wobei der Anschlusspunkt (301) an das erste Ende (321a) des ersten Leiters der zweiten Leitung (320) angeschlossen ist, wobei eine Polarisierungsspannung (Vdc0) auf den zweiten Leiter (312) der ersten Leitung (310) angewendet wird, wobei die Leitungen (310, 320) durch Verbindung des zweiten Endes (311b) des ersten Leiters der ersten Leitung (310) mit dem zweiten Leiter (322) der zweiten Leitung (320) und durch Verbindung des zweiten Leiters (312) der ersten Leitung (310) mit dem zweiten Ende (321b) des ersten Leiters der zweiten Leitung (320) untereinander gekreuzt sind.

## Claims

1. A switching circuit (202) for controlling the passage of a radiofrequency signal between a first input-output (101) and a second input-output (105), said circuit comprising at least one diode (D2) between said inputs-outputs (101, 105), said circuit being **characterised in that** said diode (D2) is polarised by a direct voltage source (Vdc2) by means of at least two crossed transmission lines (110, 120) that interconnect said diode (D2) with said direct voltage source (Vdc2).

2. The switching circuit (202) according to claim 1, each of said lines (110, 120) comprising at least two conductors (111, 121, 112, 122), said circuit being **characterised in that** said polarisation voltage source (Vdc2) is connected to the first end of the second conductor (112) of said first line (110), said diode (D2) being placed between the first end (121a) of the first conductor of said second line (120) and an input-output (101, 105) of said circuit, said lines (110, 120) being crossed together so that the second end (111b) of the first conductor of said first line (110) is connected to the second end of the second conductor (112) of said second line (120) and that the second end of said second conductor (112) of said first line (110) is connected to the second end (121b) of the first conductor of said second line (120), the first end (111a) of said first conductor of said first line (110) being connected to said input-output (101, 105).

3. The switching circuit according to claim 1 or 2, **characterised in that** each of said transmission lines (110, 120) is a coaxial cable, the core (111, 121) of which forms one of the conductors of the line and the braid (112, 122) of which forms the other conductor of said line.

4. The switching circuit according to any one of claims 1 to 3, **characterised in that** each of said transmission lines (110, 120) is surrounded by a material with magnetic permeability that is greater than 1 (315, 325).

5. The switching circuit according to any one of claims 2 to 4, **characterised in that** the first end of said second conductor (122) of said second line (120) is connected to a terminal (103) of said circuit, which terminal (103) is connected to an electrical ground (130).

6. The switching circuit according to any one of claims 2 to 5, **characterised in that** said first input-output (101) of said circuit is connected to said first end (111a) of the first conductor of said first line (110), said diode (D2) that is connected to said second transmission line (120) via a first terminal (108a) being connected via its second terminal (108b) to said second input-output (105) of said circuit.

7. The switching circuit according to any one of claims 2 to 4, **characterised in that** said first input-output (101) of said circuit is connected to said first end (121 a) of the first conductor of said second line (120) and to said first terminal (108a) of said diode (D2), said diode (D2) is connected via its second terminal (108b) to an electrical ground (130), said circuit comprising a second input-output (105) that is connected to said first end (111a) of said first conductor of said first line (110).

8. The switching circuit according to claim 7, **characterised in that** a capacitor (C_{IN}) is placed between said first input-output (101) of said circuit and said first end (111a) of the core of said first transmission line (110).

9. The switching circuit according to any one of the preceding claims, **characterised in that** it comprises a capacitor (C1) that is placed between said voltage source (Vdc2) and said electrical ground (130).

10. The switching circuit according to any one of claims 2 to 9, **characterised in that** it comprises a second diode (D1) that is connected to said first end (111a) of the first conductor of said first line (110) and is controlled by a second voltage source (Vdc1) that is connected to said first end of said second conductor (122) of said second line (120), said diodes (D1, D2) being optionally placed as follows:
- the anode of said first diode (D2) and the cathode of said second diode (D1) are each connected to a different input-output (101, 105),
- or the cathode of said first diode (D2) and the anode of said second diode (D1) are each connected to a different input-output (101, 105).

11. The switching circuit according to claim 10, **characterised in that** it comprises a capacitor (C2) that is placed between said voltage source (Vdc1) and said electrical ground (130).

12. A device for switching between a plurality of inputs-outputs (RF1, RF2) and a power signal terminal (COM) provided on one of said inputs-outputs (RF1, RF2), said device comprising a connection point (301) that is polarised by a voltage source (Vdc0), said device being **characterised in that** it comprises, between each of said inputs-outputs (RF1, RF2) and said connection point (301), a switching circuit (100, 100') according to any one of the preceding claims, the first input-output (101, 101') of each of said circuits (100, 100') being connected to a different input-output (RF1, RF2) of said device, the second input-output (105, 105') of each of said circuits being connected together at said connection point (301).

13. The switching device according to claim 12, **characterised in that** a polarisation module (305) is placed between the terminal (COM) of said switching device and said connection point (301), said module comprising two transmission lines (310, 320), said terminal (COM) of said device being connected to the first end (311a) of the first conductor of the first line (310), said connection point (301) being connected to the first end (321a) of the first conductor of the second line (320), a polarisation voltage (Vdc0) being applied to the second conductor (312) of said first line (310), said lines (310, 320) being crossed together by connecting the second end (311b) of the first conductor of said first line (310) to the second conductor (322) of said second line (320) and by connecting the second conductor (312) of said first line (310) to the second end (321b) of the first conductor of said second line (320).
